# NEUE EUROPÄISCHE PATENTSCHRIFT

(11) **EP 1 919 988 B2**
(45) Veröffentlichungstag und Bekanntmachung des Hinweises auf die Entscheidung über den Einspruch: **18.11.2015**
(45) Hinweis auf die Patenterteilung: 01.04.2009
(21) Anmeldenummer: 06792751.7
(22) Anmeldetag: 09.08.2006
(51) Int. Cl.: C08J 9/00

(54) **VERFAHREN ZUR HERSTELLUNG VON SCHAUMSTOFFPLATTEN**
METHOD FOR PRODUCING FOAMED SLABS
PROCEDE POUR PRODUIRE DES PLAQUES EN MATERIAU ALVEOLAIRE

(30) Priorität: 23.08.2005 DE 102005039976; 05.04.2006 EP 06112265
(43) Veröffentlichungstag der Anmeldung: 14.05.2008
(73) Patentinhaber: BASF SE, 67056 Ludwigshafen (DE)
(72) Erfinder: ALLMENDINGER, Markus, 67480 Edenkoben (DE); HAHN, Klaus, 67281 Kirchheim (DE); SCHMIED, Bernhard, 67227 Frankenthal (DE); RIETHUES, Michael, 67071 Ludwigshafen (DE); ANTONATUS, Edith, 67112 Mutterstadt (DE)
(86) Internationale Anmeldenummer: PCT/EP2006/065174
(87) Internationale Veröffentlichungsnummer: WO 2007/023089

(56) Entgegenhaltungen:
- WO-A-2005/056268
- US-A1- 2004 054 020

## Beschreibung

Die Erfindung betrifft ein Verfahren zur Herstellung von Schaumstoffformkörpern aus vorgeschäumten Schaumstoffpartikeln, welche eine Polymerbeschichtung aufweisen, sowie daraus hergestellte Schaumstoffformköper und deren Verwendung.

Partikelschaumstoffe werden üblicherweise durch Versintern von Schaumstoffpartikeln, beispielsweise aus vorgeschäumten expandierbaren Polystyrolpartikeln (EPS) oder expandierten Polypropylenpartikeln (EPP), in geschlossenen Formen mittels Wasserdampf erhalten. Damit die Schaumpartikel nachexpandieren und miteinander zu dem Schaumstoffformkörper gut verschweißen können, müssen sie in der Regel noch geringe Restmengen an Treibmittel enthalten. Die Schaumstoffpartikel dürfen daher nach dem Vorschäumen nicht zu lange gelagert werden. Auch können aufgrund der fehlenden Nachexpandierbarkeit von zerkleinerten Schaumstoffrecyclaten aus nicht mehr verwendungsfähigen Partikelschaumstoffen nur geringe Mengen zur Herstellung neuer Schaumstoffformkörper zugemischt werden.

Die WO 00/050500 beschreibt flammgeschützte Schaumstoffe aus vorgeschäumten Polystyrolpartikeln, welche zusammen mit einer wässrigen Nätriumsilikatlösung und einem Latex eines hochmolekularen Vinylacetatcopolymer gemischt, in eine Form gegossen und unter Schütteln an Luft getrocknet werden. Hierbei entsteht nur eine lose Schüttung aus Polystyrolpartikeln, die an wenigen Punkten miteinander verklebt sind und daher nur ungenügende mechanische Festigkeiten aufweisen.

Die WO 2005/105404 beschreibt ein energiesparendes Verfahren zur Herstellung von Schaumstoffformkörpem, bei der die vorgeschäumten Schaumstoffpartikel mit einer Harzlösung beschichtet werden, welche eine gegenüber dem expandierbaren Polymer niedrigere Erweichungstemperatur aufweist. Die beschichteten Schaumpartikel werden anschließend in einer Form unter Anwendung äußeren Drucks oder durch Nachexpansion der Schaumpartikel wie üblich mit heißem Wasserdampf verschweißt. Hierbei können wasserlösliche Bestandteile der Beschichtung ausgewaschen werden. Aufgrund der höheren Temperaturen an den Eintrittstellen und dem Abkühlen des Wasserdampfes beim Kondensieren, kann die Verschweißung der Schaumpartikel und die Dichte kann über den gesamten Schaumstoffkörper erheblich schwanken. Außerdem kann kondensierender Wasserdampf in den Zwickeln zwischen den Schaumpartikeln eingeschlossen werden.

Aufgabe der Erfindung war es daher, den genannte Nachteilen abzuhelfen und ein einfaches und energiesparendes Verfahren zur Herstellung von Schaumstoffformkörpem mit gleichmäßiger Dichteverteilung und guten mechanischen Eigenschaften zu finden.

Demgemäss wurde ein Verfahren zur Herstellung von Schaumstoffformkörpern umfassend die Stufen
a) Vorschäumen von expandierbaren Styrolpolymeren zu Schaumstoffpartikeln,
b) Beschichten der Schaumstoffpartikel mit einer wässrigen Polymerdispersion ,
c) Einfüllen der beschichteten Schaumstoffpartikel in eine Form und Versintern unter Druck in Abwesenheit von Wasserdampf,
wobei die Polymerbeschichtung Alkalimetallsilikate, Metallhydroxide, Metallsalz-Hydrate oder Metalloxid-Hydrate und als Bindemittel ein Acrylatharz enthält, gefunden.

Als Schaumstoffpartikel werden vorgeschäumte Partikel aus expandierbaren Styrolpolymeren, insbesondere expandierbarem Polystyrol (EPS) eingesetzt. Die Schaumstoffpartikel weisen in der Regel einen mittleren Partikeldurchmesser im Bereich von 2 bis 10 mm auf. Die Schüttdichte der Schaumstoffpartikel beträgt in der Regel 5 bis 50 kg/m³, bevorzugt 5 bis 40 kg/m³ und insbesondere 8 bis 16 kg/m³, bestimmt nach DIN EN ISO 60.

Die Schaumstoffpartikel auf Basis von Styrolpolymeren können durch Vorschäumen von EPS mit Heißluft oder Wasserdampf in einem Vorschäumer auf die gewünschte Dichte erhalten werden. Durch ein- oder mehrmaliges Vorschäumen in einem Druck- oder kontinuierlichen Vorschäumer können hierbei Endschüttdichten unter 10 g/l erhalten werden.

Aufgrund ihrer hohen Wärmedämmfähigkeit verwendet man besonders bevorzugt vorgeschäumte, expandierbare Styrolpolymerisate, die athermane Festkörper, wie Ruß, Aluminium oder Graphit, insbesondere Graphit einer mittleren Partikelgröße im Bereich von 1 bis 50 µm Partikeldurchmesser in Mengen von 0,1 bis 10 Gew.-%, insbesondere 2 bis 8 Gew.-%, bezogen auf EPS, enthalten und beispielsweise aus EP-B 981 574 und EP-B 981 575 bekannt sind.

Die Polymerschaumpartikel können mit Flammschutzmitteln ausgerüstet sein. Sie können hierzu beispielsweise 1 bis 6 Gew.-% einer organischen Bromverbindung, wie Hexabromcylcodecan (HBCD) und gegebenenfalls zusätzlich 0,1 bis 0,5 Gew.-% Dicumyl oder eines Peroxides enthalten. Bevorzugt werden jedoch Flammschutzmittel, insbesondere halogenfreie Flammschutzmittel ausschließlich in der Polymerbeschichtung verwendet.

Bei dem erfindungsgemäßen Verfahren können auch zerkleinerte Schaumstoffpartikel aus recyclierten Schaumstoffformkörpern eingesetzt werden. Zur Herstellung der Schaumstoffformkörper können die zerkleinerten Schaumstoffrecyclate zusammen mit Neuware eingesetzt werden, ohne wesentliche Beeinträchtigung des Festigkeit und der mechanischen Eigenschaften.

In der Regel besteht die Beschichtung aus einem Polymerfilm, der eine oder mehrere Glasübergangstemperaturen im Bereich von -60° bis + 100°C aufweist und in dem gegebenenfalls Füllstoffe eingebettet sein können. Bevorzugt liegen die Glasübergangstemperaturen des Polymerfilmes im Bereich von -30° bis + 80°C, besonders bevorzugt im Bereich von -10° bis + 60°C. Die Glasübergangstemperatur kann mittels Differential Scanning Calorimetrie (DSC) bestimmt werden. Das Molekulargewicht des Polymerfilms, bestimmt nach Gelpermeationschromatographie (GPC), liegt bevorzugt unter 400.000 g/mol.

Zur Beschichtung der Schaumstoffpartikel können übliche Verfahren, wie Besprühen, Tauchen oder Benetzen der Schaumpartikel mit einer Polymerdispersion in üblichen Mischern, Sprühvorrichtungen, Tauchvorrichtungen bzw. Trommelapparaturen eingesetzt werden.

Als Bindemittel für die Polymerbeschichtung eignen sich Acrylatharze, die als wässrige Polymerdispersionen auf die Schaumstoffpartikel, gegebenenfalls zusätzlich mit hydraulischen Bindemittel auf Basis von Zement, Kalkzement oder Gips aufgetragen werden. Geeignete Polymerdispersionen sind beispielsweise durch radikalische Emulsionspolymerisation von ethylenisch ungesättigten Monomeren, wie Styrol, Acylate oder Methacrylate, wie in WO 00/50480 beschrieben, erhältlich.

Besonders bevorzugt sind reine Acrylate oder Styrol-Acrylate, welche aus den Monomeren Styrol, n-Butylacrylat, Methylmetharcylat (MMA), Methacrylsäure, Acrylamid oder Methylolacrylamid, aufgebaut sind.

Die Herstellung der Polymerdispersion erfolgt in an sich bekannter Weise, etwa durch Emulsions-, Suspensions-, oder Dispersionspolymerisation, bevorzugt in wässriger Phase. Man kann das Polymer auch durch Lösungs- oder Massepolymerisation herstellen, ggf. zerteilen und die Polymerpartikel anschließend in Wasser in üblicher Weise dispergieren. Bei der Polymerisation werden die für das jeweilige Polymerisationsverfahren üblichen Initiatoren, Emulgatoren bzw. Suspensionshilfsmittel, Regler bzw. sonstigen Hilfsstoffe mitverwendet; und man polymerisiert kontinuierlich oder diskontinuierlich bei den für das jeweilige Verfahren üblichen Temperaturen und Drucken in gebräuchlichen Reaktoren.

Die Polymerbeschichtung kann auch Additive, wie anorganische Füllstoffe, wie Pigmente oder Flammschutzmittel enthalten. Der Anteil an Additiven hängt von dessen Art und der gewünschten Wirkung ab und beträgt für anorganische Füllstoffe in der Regel 10 bis 99 Gew.-%, bevorzugt 20 bis 98 Gew.-%, bezogen auf die Additiv-haltige Polymerbeschichtung

Bevorzugt enthält die Beschichtungsmischung wasserbindende Substanzen wie z.B. Wasserglas. Dies führt zu einer besseren bzw. schnelleren Verfilmung der Polymerdispersion und damit einem schnelleren Aushärten des Schaumstoffformteils.

Bevorzugt enthält die Polymerbeschichtung Flammschutzmittel, wie Blähgraphit, Borate, insbesondere Zinkborate, Melaminverbindungen oder Phosphorverbindungen oder intumeszierende Massen, welche sich bei Einwirkung höherer Temperaturen, in der Regel über 80 bis 100°C, aufblähen, quellen oder aufschäumen und dabei einen isolierenden und hitzebeständigen Schaum bilden, der die darunter liegenden wärmedämmende Schaumstoffpartikel vor der Feuer- und Hitzewirkung schützt. Die Menge der Flammschutzmittel oder intumeszierenden Massen beträgt in der Regel, 2 bis 99 Gew.-%, bevorzugt 5 bis 98 Gew. % bezogen auf die Polymerbeschichtung.

Bei Verwendung von Flammschutzmitteln in der Polymerbeschichtung, ist es auch möglich, einen ausreichenden Brandschutz bei Verwendung von Schaumstoffpartikeln, die keine, insbesondere keine halogenierten Flammschutzmittel enthalten, zu erreichen, bzw. mit geringeren Mengen an Flammschutzmittel auszukommen, da sich das Flammschutzmittel in der Polymerbeschichtung konzentriert auf der Oberfläche der Schaumstoffpartikel befindet und bei Hitze- oder Feuereinwirkung ein festes Gerüstnetz bildet.

Die Polymerbeschichtung enthält als Additive intumeszierende Massen, die chemisch gebundenes Wasser enthalten oder bei Temperaturen über 40°C Wasser abspalten, nämlich Alkalimetallsilikate, Metallhydroxide, Metallsalz-Hydrate und Metalloxid-Hydrate.

Mit dieser Beschichtung versehene Schaumpartikel können zu Schaumstoffformkörpern mit erhöhter Brandbeständigkeit, welche ein Brandverhalten der Klasse B gemäß DIN 4102 aufweisen, verarbeitet werden

Geeignete Metallhydroxide sind insbesondere solche der Gruppen 2 (Erdalkalimetalle) und 13 (Bor-Gruppe) des Periodensystems. Bevorzugt sind Magnesiumhydroxid und Aluminiumhydroxid. Letzteres ist besonders bevorzugt.

Als Metallsalz-Hydrate eignen sich alle Metallsalze, in deren Kristallstruktur Kristallwasser eingebaut ist. Analog eignen sich als Metalloxid-Hydrate alle Metalloxide, die in die Kristallstruktur eingebautes Kristallwasser enthalten. Dabei kann die Anzahl der Kristallwassermoleküle pro Formeleinheit die maximal mögliche sein oder darunter liegen, z.B. Kupfersulfat-Pentahydat, -Trihydrat oder -Monohydrat. Zusätzlich zum Kristallwasser können die Metallsalz-Hydrate bzw. Metalloxid-Hydrate auch Konstitutionswasser enthalten.

Bevorzugte Metallsalz-Hydrate sind die Hydrate von Metallhalogeniden (insbesondere -chloriden), -sulfaten, -carbonaten, -phosphaten, -nitraten oder-boraten. Geeignet sind beispielsweise Magnesiumsulfat-Decahydrat, Natriumsulfat-Decahydrat, Kupfersulfat-Pentahydrat, Nickelsulfat-Heptahydrat, Cobalt(II)chlorid-Hexahydrat, Chrom(III)-chlorid-Hexahydrat, Natriumcarbonat-Decahydrat, Magnesiumchlorid-Hexahydrat, und die Zinnborat-Hydrate. Magnesiumsulfat-Decahydrat und Zinnborat-Hydrate sind besonders bevorzugt.

Ebenfalls als Metallsalz-Hydrate in Betracht kommen Doppelsalze bzw. Alaune, beispielsweise solche der allgemeinen Formel: M^{I}M^{III}(SO₄)₂ ·12 H₂O. Als M' können z.B. Kalium, Natrium, Rubidium, Cäsium, Ammonium, Thallium oder Aluminium-Ionen auftreten. Als M"' fungieren z.B. Aluminium, Gallium, Indium, Scandium, Titan, Vanadium, Chrom, Mangan, Eisen, Cobalt, Rhodium oder Iridium.

Als Metalloxid-Hydrate eignen sich z.B. Aluminiumoxid-Hydrat und bevorzugt Zinkoxid-Hydrat oder Bortrioxid-Hydrat.

Eine bevorzugte Polymerbeschichtung kann durch Mischen von
40 bis 80, bevorzugt 50 bis 70 Gew.-Teilen einer Wasserglaslösung mit einem Wassergehalt von 40 bis 90, bevorzugt 50 bis 70 Gew.-%,
20 bis 60, bevorzugt 30 bis 50 Gew.-Teilen eines Wasserglaspulvers mit einem Wassergehalt von 0 bis 30, bevorzugt 1 bis 25 Gew.-%, und
5 bis 40, bevorzugt 10 bis 30 Gew.-Teile einer Polymerdispersion mit einem Feststoffgehalt von 10 bis 60, bevorzugt 20 bis 50 Gew.-%,
oder durch Mischen von
20 bis 95, bevorzugt 40 bis 90 Gew.-Teilen einer Aluminiumhydroxidsuspension mit einem Aluminiumhydroxidgehalt von 10 bis 90, bevorzugt 20 bis 70 Gew.-%,
5 bis 40, bevorzugt 10 bis 30 Gew.-Teile einer Polymerdispersion mit einem Feststoffgehalt von 10 bis 60, bevorzugt 20 bis 50 Gew.-%,
erhalten werden.

Bei dem erfindungsgemäßen Verfahren kann der Druck beispielsweise durch Verkleinerung des Volumens der Form mittels eines beweglichen Stempels erzeugt werden. In der Regel wird hierbei ein Druck im Bereich von 0,5 bis 30 kg/cm² eingestellt. Die Mischung aus beschichteten Schaumstoffpartikel wird hierzu in die geöffnete Form gefüllt. Nach dem Verschließen der Form werden die Schaumpartikel mit dem Stempel verpresst, wobei die Luft zwischen den Schaumstoffpartikeln entweicht und das Zwickelvolumen verringert wird. Die Schaumstoffpartikel werden durch die Polymerbeschichtung zum Schaumstoffformkörper verbunden.

Das Formwerkzeug wird entsprechend der gewünschten Geometrie des Schaumstoffkörpers ausgestaltet. Der Füllgrad richtet sich u.a. nach der gewünschten Dicke des späteren Formteils. Für Schaumstoffplatten kann eine einfache kastenförmige Form verwendet werden. Insbesondere bei komplizierteren Geometrien kann es erforderlich sein, die Schüttung der in die Form eingefüllten Partikel zu verdichten und auf diese Weise unerwünschte Hohlräume zu beseitigen. Das Verdichten kann z.B. durch Rütteln der Form, Taumelbewegungen oder andere geeignete Maßnahmen erfolgen.

Zur Beschleunigung des Abbindens kann Heißluft in die Form eingedrückt oder die Form beheizt werden. Erfindungsgemäß wird kein Wasserdampf in die Form eingebracht, damit keine wasserlöslichen Bestandteile der Polymerbeschichtung der Schaumstoffpartikel ausgewaschen werden und sich kein Kondenswasser in den Zwickeln bilden kann. Zur Temperierung der Form können jedoch beliebige Wärmeträgermedien, wie Öl oder Dampf eingesetzt werden. Die Heißluft bzw. die Form wird hierfür zweckmäßigerweise auf eine Temperatur im Bereich von 20 bis 120°C, bevorzugt 30 bis 90°C temperiert.

Alternativ oder zusätzlich kann das Versintern unter Einstrahlung von Mikrowellenenergie erfolgen. Hierbei werden in der Regel Mikrowellen im Frequenzenbereich zwischen 0,85 und 100 GHz, bevorzugt 0,9 bis 10 GHz und Bestrahlungszeiten zwischen 0,1 bis 15 Minuten verwendet.

Bei Verwendung von Heißluft mit Temperaturen im Bereich von 80 bis 150°C oder durch Einstrahlen von Mikrowellenenergie bildet sich üblicherweise ein Überdruck von 0,1 bis 1,5 bar, so dass das Verfahren auch ohne äußeren Druck und ohne Volumenverringerung der Form durchgeführt werden kann. Der durch die Mikrowellen oder höheren Temperaturen entstehenden Innendruck lässt die Schaumstoffpartikel leicht weiterexpandieren, wobei diese zusätzlich zur Verklebung über die Polymerbeschichtung auch durch Erweichung der Schaumpartikel selbst verschweißen können. Dabei verschwinden die Zwickel zwischen den Schaumstoffpartikeln. Zur Beschleunigung des Abbindens kann auch hier die Form wie oben beschrieben mit einem Wärmeträgermedium zusätzlich beheizt werden.

Zur kontinuierlichen Herstellung der erfindungsgemäßen Schaumstoffformkörper eignen sich auch Doppelbandanlagen wie sie zur Herstellung von Polyurethanschaumstoffen verwendet werden. Beispielsweise können die vorgeschäumten und beschichteten Schaumstoffpartikel kontinuierlich auf das untere von zwei Metallbänder, welche gegebenenfalls eine Perforation aufweisen können, aufgetragen werden und mit Kompression durch die zusammenlaufenden Metallbänder zu endlosen Schaumstoffplatten verarbeitet werden. In einer Verfahrensausführung wird das Volumen zwischen den beiden Bändem.zunehmend verringert, wodurch das Produkt zwischen den Bändern komprimiert wird und die Zwickel zwischen den Schaumstoffpartikeln verschwinden. Nach einer Aushärtungszone wird eine Endlos-Platte erhalten. In einer anderen Ausführungsform kann das Volumen zwischen den Bändern konstant gehalten werden und eine Zone mit Heißluft oder Mikrovvellenbestrahlung durchlaufen in der die Schaumstoffpartikel nachschäumen. Auch hier verschwinden die Zwickel und eine Endlosplatte wird erhalten. Es ist auch möglich, die beiden kontinuierlichen Verfahrensauführungen zu kombinieren.

Die Dicke, Länge und Breite der Schaumstoffplatten kann in weiten Grenzen variieren und wird durch die Größe und Schließkraft des Werkzeugs begrenzt. Die Dicke der Schaumstoffplatten beträgt üblicherweise 1 bis 500 mm, bevorzugt 10 bis 300 mm.

Die Dichte der Schaumstoffformkörper gemäß DIN 53420 beträgt in der Regel 10 bis 120 kg/_{M}³, bevorzugt 20 bis 90 kg/m³. Mit dem erfindungsgemäßen Verfahren ist es möglich, Schaumstoffformkörper mit gleichmäßigem Dichte über den gesamten Querschnitt zu erhalten. Die Dichte der Randschichten entspricht etwa der Dichte der inneren Bereiche des Schaumstoffformkörpers.

Das erfindungsgemäße Verfahren eignet sich zur Herstellung von einfachen oder komplexen Schaumstoffformteilen, wie Platten, Blöcken, Rohren, Stäben, Profilen, etc. Bevorzugt werden Platten oder Blöcke, welche anschließend zu Platten gesägt oder geschnitten werden können, hergestellt. Sie können beispielsweise im Bauwesen zur Dämmung von Außenwänden verwendet werden. Besonders bevorzugt werden sie als Kernschicht zur Herstellung von Sandwich-Element, beispielsweise sogenannten structural insulation panels (SIP) verwendet, welch für die Errichtung von Kühlhäuser oder Lagerhallen eingesetzt werden.

Weitere Anwendungsmöglichkeiten sind Paletten aus Schaumstoff als Ersatz für Holzpaletten, Deckensichtplatten, Kühlkontainer, Wohnwagen. Mit Flammschutzausrüstung eignen sich diese auch für die Luftfracht.

### Beispiele:

### Herstellung der Beschichtungsmischung B1:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 10 Teile einer Acrylatdispersion (Acronal S790, Feststoffgehalt ca. 50%) untergerührt.

### Herstellung der Beschichtungsmischung B2:

Zu 60 Teilen einer Wasserglaslösung (Woellner Natriumsilikat 38/40, Feststoffanteil 36%, Dichte 1,37 Molverhältnis SiO₂:Na₂O = 3,4) wurden portionsweise unter Rühren 40 Teile Wasserglaspulver (Portil N) zugegeben und ca. 3 bis 5 Minuten homogenisiert. Anschließend wurden 20 Teile einer Acrylatdispersion (Acronal S790, Feststoffgehalt ca. 50%) untergerührt.

### Polystyrolschaumstoffpartikel I (Dichte 10 g/l)

Expandierbares Polystyrol (Neopor® 2200 der BASF Aktiengesellschaft, Perlgröße des Rohstoffes 1,4 - 2,3 mm) wurde auf einem kontinuierlichen Vorschäumer auf eine Dichte von ca. 18 g/l vorgeschäumt. Nach einer Zwischenlagerungszeit von ca. 4 Stunden wurde auf dem selben Vorschäumer auf die gewünschte Dichte von nachgeschäumt. Das vorgeschäumten Polystyrolschaumpartikel hatten eine Partikelgröße im Bereich von 6 bis 10 mm.

### Polystyrolschaumstoffpartikel II (Dichte 15 g/l)

Expandierbares Polystyrol (Neopor® 2200 der BASF Aktiengesellschaft, Perlgröße des Rohstoffes 1,4 - 2,3 mm) wurde auf einem kontinuierlichen Vorschäumer auf eine Dichte von ca. 15 g/l vorgeschäumt.

### Pressen unter Volumenreduktion:

### Beispiel 1

Die Polystyrolschaumpartikel I wurden in einem Mischer mit der Beschichtungsmischung B1 im Gewichtsverhältnis 1:4 beschichtet. Die beschichteten Polystyrolschaumpartikel wurden in eine auf 70°C temperierte, Teflonbeschichtete Form gefüllt und mit einem Stempel auf 50 % des ursprünglichen Volumens verpresst. Nach der Aushärtung bei 70°C für 30 Minuten wurde das Schaumstoffformteil entformt. Zur weiteren Konditionierung wurde das Formteil mehrere Tage bei Umgebungstemperatur gelagert. Die Dichte des gelagerten Formteils betrug 78 g/l.

### Beispiel 2

Beispiel 1 wurde wiederholt, wobei als Polystyrolschaumpartikel Recylat mit einer mittleren Dichte von 18 g/l aus Polystyrolpartikelschaumstoff, welches in einem Mischer mit der Beschichtungsmischung B2 im Gewichtsverhältnis 1 : 2 beschichtet wurde, eingesetzt. Die Dichte des gelagerten Formteils betrug 78 g/l.

### Beispiel 3

Die Polystyrolschaumpartikel II wurden in einem Mischer mit der Beschichtungsmischung B2 im Gewichtsverhältnis 1:2 beschichtet. Die beschichteten Polystyrolschaumpartikel wurden in eine Teflonbeschichtete Form gefüllt und Heißluft (110°C, 0,8bar Überdruck) durch verschließbare Schlitze injiziert. Die Schaumstoffpartikel expandierten nach und verschweißten zu einem Schaumstoffblock, welcher nach 5 Minuten entformt wurde. Zur weiteren Konditionierung wurde das Formteil mehrere Tage bei Umgebungstemperatur gelagert. Die Dichte des.gelagerten Formteils betrug 45 g/l.

### Pressen mit Heißluft und Volumenreduktion

### Beispiel 4

Die Polystyrolschaumpartikel II wurden in einem Mischer mit der Beschichtungsmischung B2 im Gewichtsverhältnis 1:2 beschichtet. Die beschichteten Polystyrolschaumpartikel wurden in eine Teflonbeschichtete Form gefüllt und Heißluft (110°C, 0,8bar Überdruck) durch verschließbare Schlitze injiziert. Gleichzeitig wurde das Volumen mittels einem beweglichen Stempel um 20% reduziert. Die Schaumstoffpartikel expandierten nach und verschweißten zu einem Schaumstoffblock, welcher nach 5 Minuten entformt wurde. Zur weiteren Konditionierung wurde das Formteil mehrere Tage bei Umgebungstemperatur gelagert. Die Dichte des gelagerten Formteils betrug 45 g/l.

### Pressen unter Nachschäumen durch Mikrowelle:

### Beispiel 5

Die Polystyrolschaumpartikel II wurden in einem Mischer mit der Beschichtungsmischung im Gewichtsverhältnis 1:2 beschichtet. Die beschichteten Polystyrolschaumpartikel wurden in eine Teflonbeschichtete Form gefüllt. Unter Einwirkung mehrfach gepulster Mikrowellenstrahlung nachexpandiert expandierten die Schaumstoffpartikel nach und verschweißten zu einem Schaumstoffblock. Zur weiteren Konditionierung wurde das entformte Formteil mehrere Tage bei Umgebungstemperatur gelagert. Die Dichte des gelagerten Formteils betrug 45 g/l.

Die Schaumstoffformkörper der Beispiele 1 bis 5 zeichnen sich dadurch aus, dass sie im Brandtest nicht abtropfen und bei Hitzeeinwirkung nicht zurückweichen. Sie selbstverlöschend und erfüllen die Anforderungen der Brandtests B2 bzw. E.

Aus den Schaumstoffplatten der Beispiele 1 bis 5 wurden Sandwich-Elemente mit Metalldeckschichten hergestellt: Platten mit den Abmessungen 600 x 100 x 100 mm und einer Dichte wie in den Beispielen angegeben wurde beidseitig mit einer jeweils 50 µm dicken Schicht eines Polyurethan-Klebstoffs versehen. Auf den Kleber wurden Stahlplatten von jeweils 1 mm Dicke aufgebracht. Man ließ den Kleber 5 Stunden lang bei 25°C aushärten.

Zur Prüfung des Brandverhaltens im Sandwich-Element wurde das Element waagerecht befestigt (Metallflächen oben und unten) und unter der Platte ein Gasbrenner platziert. Dessen Gasflamme war auf die Mitte der Plattenunterseite gerichtet, die Flamme war etwa 5 cm hoch und hatte eine Flammentemperatur von etwa 600 °C. Der Abstand der Flammenspitze zur Unterseite der Platte betrug 2 cm.
Die Prüfung des Brandverhaltens ergab, dass nach 30 min Brenndauer der Flamme nur ein geringer Teil des Polystyrolschaums zwischen den Metallplatten geschmolzen war. Die mechanische Stabilität der Platte blieb erhalten. Der Polystyrolschaum tropfte nicht ab und entzündete sich nicht. Die Rauchentwicklung war sehr gering.

### Vergleichsversuch 1 - Verwendung von Wasserdampf zum Ausschäumen:

Die Polystyrolschaumpartikel I wurden in einem Mischer mit der Beschichtungsmischung B1 im Gewichtsverhältnis 1:4 beschichtet. Die beschichteten Polystyrolschaumpartikel wurden in eine Teflon-beschichtete Form gefüllt und mittels Dampfdüsen bei 0,5 bar Überdruck für 30 Sekunden bedampft. Das Formteil wurde aus der Form genommen und zur weiteren Konditionierung mehrere Tage bei Umgebungstemperatur gelagert. Die Dichte des gelagerten Formteils betrug 50 g/l. Die Beschichtung wurde teilweise durch Dampf-Kondensat ausgewaschen und ungleichmäßig im Formteil verteilt, was zu einem Dichte-Gradient über das Formteil von innen nach außen führte. Die Brandtests zeigten im Randbereich des Formteils eine schlechtere Flammenbeständigkeit.

### Vergleichsversuch 2

Beispiel 1 wurde wiederholt mit dem Unterschied, dass der Stempel nicht bewegt wurde und somit keine Volumenreduktion und keine Komprimierung erfolgte. Die Schaumpartikel in der Form wurden durch Rütteln verdichtet. Zur weiteren Konditionierung wurde das Formteil mehrere Tage bei Umgebungstemperatur gelagert. Die Dichte des gelagerten Formteils betrug 40 g/l. Es wurde nur eine Punktverklebung der Schaumstoffpartikel erreicht. Aufgrund des großen Zwickelvolumens ist die Druckfestigkeit und Biegefestigkeit deutlich verringert und die Wasseraufnahme der Schaumstoffplatte höher.

## Patentansprüche

1. Verfahren zur Herstellung von Schaumstoffformkörpern, umfassend die Stufen
a) Vorschäumen von expandierbaren Styrolpolymeren zu Schaumstoffpartikeln,
b) Beschichten der Schaumstoffpartikel mit einer wässrigen Polymerdispersion,
c) Einfüllen der beschichteten Schaumstoffpartikel in eine Form und Versintern unter Druck in Abwesenheit von Wasserdampf,
**dadurch gekennzeichnet, dass** die Polymerbeschichtung Alkalimetallsilikate, Metallhydroxide, Metallsalz-Hydrate oder Metalloxid-Hydrate und als Bindemittel ein Acrylatharz enthält.

2. Verfahren nach Anspruch 1, **dadurch gekennzeichnet, dass** der Druck durch Verkleinerung des Volumens der Form erzeugt wird.

3. Verfahren nach Anspruch 1 oder 2, **dadurch gekennzeichnet, dass** Heißluft In die Form eingedrückt wird.

4. Verfahren nach einem der Ansprüche 1 bis 3, **dadurch gekennzeichnet, dass** das Versintern unter Einstrahlung von Mikrowellenenergie erfolgt.

5. Verfahren nach einem der Ansprüche 1 bis 4, **dadurch gekennzeichnet, dass** ein Druck im Bereich von 0,5 bis 30 kg/cm² eingestellt wird.

6. Verfahren nach einem der Ansprüche 1 bis 5, **dadurch gekennzeichnet, dass** die Form auf eine Temperatur Im Bereich von 30 bis 90°C temperiert wird.

7. Verfahren nach einem der Ansprüche 1 bis 6, **dadurch gekennzeichnet, dass** die Polymerbeschichtung aus einem einen anorganischen Füllstoff enthaltenden Polymerfilm, der eine Glasübergangstemperatur im Bereich von -60 bis +60°C aufweist, besteht.

8. Verfahren nach einem der Ansprüche 1 bis 7, **dadurch gekennzeichnet, dass** die Polymerbeschichtung durch Mischen von
40 bis 80 Gew.-Teilen einer Wasserglaslösung mit einem Wassergehalt von 40 bis 90 Gew.-%,
20 bis 60 Gew.-Teilen eines Wasserglaspulvers mit einem Wassergehalt von 0 bis 30 Gew.-%, und
5 bis 40 Gew.-Teilen einer Polymerdispersion mit einem Feststoffgehalt von 10 bis 60 Gew.-%.
oder durch Mischen von
20 bis 95 Gew.-Teilen einer Aluminiumhydroxidsuspension mit einem Aluminiumhydroxidgehalt von 10 bis 90 Gew.-%,
5 bis 40 Gew.-Teilen einer Polymerdispersion mit einem Feststoffgehalt von 10 bis 60 Gew.-%,
erhalten wird.

## Claims

1. A process for producing foam moldings, which comprises the steps
a) prefoaming of expandable styrene polymers to form foam particles,
b) coating of the foam particles with an aqueous polymer dispersion,
c) introduction of the coated foam particles into a mold and sintering under pressure in the absence of steam,
wherein the polymer coating comprises alkali metal silicates, metal hydroxides, metal salt hydrates or metal oxide hydrates and an acrylate resin as binder.

2. The process according to claim 1, wherein the pressure is generated by reducing the volume of the mold.

3. The process according to claim 1 or 2, wherein hot air is injected into the mold.

4. The process according to any of claims 1 to 3, wherein sintering is effected with radiation of microwave energy into the mold.

5. The process according to any of claims 1 to 4, wherein a pressure in the range from 0.5 to 30 kg/cm² is set.

6. The process according to any of claims 1 to 5, wherein the mold is heated to a temperature in the range from 30 to 90°C.

7. The process according to any of claims 1 to 6, wherein the polymer coating consists of a polymer film which comprises an inorganic filler and has a glass transition temperature in the range from -60 to +60°C.

8. The process according to any of claims 1 to 7, wherein the polymer coating is obtained by mixing from 40 to 80 parts by weight of a water glass solution having a water content of from 40 to 90% by weight,
from 20 to 60 parts by weight of a water glass powder having a water content of from 0 to 30% by weight and
from 5 to 40 parts by weight of a polymer dispersion having a solids content of from 10 to 60% by weight,
or by mixing
from 20 to 95 parts by weight of an aluminum hydroxide suspension having an aluminum hydroxide content of from 10 to 90% by weight,
from 5 to 40 parts by weight of a polymer dispersion having a solids content of from 10 to 60% by weight.

## Revendications

1. Procédé pour la production de corps moulés en mousse, comprenant les étapes
a) prémoussage de polymères de styrène expansibles en particules de mousse,
b) enrobage des particules de mousse avec une dispersion aqueuse de polymère,
c) introduction des particules de mousse enrobées dans un moule et frittage sous pression en absence de vapeur d'eau,
**caractérisé en ce que** l'enrobage en polymère contient des silicates de métaux alcalins, des hydroxydes de métaux, des sels métalliques hydratés ou des oxydes métalliques hydratés et une résine acrylate en tant que liant.

2. Procédé selon la revendication 1, **caractérisé en ce que** la pression est engendrée par réduction du volume du moule.

3. Procédé selon la revendication 1 ou 2, **caractérisé en ce que** de l'air chaud est introduit sous pression dans le moule.

4. Procédé selon l'une quelconque des revendications 1 à 3, **caractérisé en ce que** le frittage s'effectue sous irradiation d'énergie micro-onde.

5. Procédé selon l'une quelconque des revendications 1 à 4, **caractérisé en ce qu'**on règle une pression dans la plage de 0,5 à 30 kg/cm².

6. Procédé selon l'une quelconque des revendications 1 à 5, **caractérisé en ce que** le moule est porté à une température dans la plage de 30 à 90 °C.

7. Procédé selon l'une quelconque des revendications 1 à 6, **caractérisé en ce que** l'enrobage en polymère consiste en un film polymère contenant une charge inorganique, qui présente une température de transition vitreuse dans la plage de -60 à +60 °C.

8. Procédé selon l'une quelconque des revendications 1 à 7, **caractérisé en ce que** l'enrobage en polymère est obtenu par mélange de
40 à 80 parties en poids d'une solution d'orthosilicate ayant une teneur en eau de 40 à 90 % en poids,
20 à 60 parties en poids d'une poudre d'orthosilicate ayant une teneur en eau de 0 à 30 % en poids, et
5 à 40 parties en poids d'une dispersion de polymère ayant une teneur en matière solide de 10 à 60 % en poids,
ou par mélange de
20 à 95 parties en poids d'une suspension d'hydroxyde d'aluminium ayant une teneur en hydroxyde d'aluminium de 10 à 90 % en poids,
5 à 40 parties en poids d'une dispersion de polymère ayant une teneur en matière solide de 10 à 60 % en poids.
